# EUROPÄISCHE PATENTSCHRIFT

(11) **EP 1 899 690 B1**
(45) Veröffentlichungstag und Bekanntmachung des Hinweises auf die Patenterteilung: **14.07.2010**
(21) Anmeldenummer: 06755206.7
(22) Anmeldetag: 16.05.2006
(51) Int. Cl.: G01F 23/284

(54) **VERFAHREN ZUR ERMITTLUNG DES FÜLLSTANDS EINES MEDIUMS IN EINEM BEHÄLTER NACH DER LAUFZEITMESSMETHODE**
METHOD FOR DETERMINING A MEDIUM LEVEL IN A CONTAINED BY A PROPAGATION-TIME MEASURING METHOD
PROCEDE POUR DETERMINER LE NIVEAU D'UN FLUIDE DANS UN RESERVOIR SELON LA METHODE DE MESURE DU TEMPS DE TRANSIT

(30) Priorität: 05.07.2005 DE 102005031667
(43) Veröffentlichungstag der Anmeldung: 19.03.2008
(73) Patentinhaber: Endress+Hauser GmbH+Co. KG, 79689 Maulburg (DE)
(72) Erfinder: CHEN, Qi, 79689 Maulburg (DE)
(74) Vertreter: Andres, Angelika Maria
(86) Internationale Anmeldenummer: PCT/EP2006/062337
(87) Internationale Veröffentlichungsnummer: WO 2007/003466

(56) Entgegenhaltungen:
- EP-A- 1 431 723
- US-A- 5 614 831

## Beschreibung

Die Erfindung betrifft ein Verfahren zur Ermittlung und Überwachung des Füllstands eines Mediums in einem Behälter nach der Laufzeitmessmethode, wobei über ein erstes Einkoppelelement einer Antenne hochfrequente Sendesignale in einer vorgegebenen Polarisationsebene des elektrischen Feldes ausgesendet werden, und wobei anhand der in das erste Einkoppelelement zurück eingekoppelten Reflexionssignalen der Füllstand ermittelt wird.

Derartige Verfahren zur Ermittlung und Überwachung des Füllstandes in einem Behälter werden häufig in den Messgeräten der Automations- und Prozesssteuerungstechnik eingesetzt. Von der Anmelderin werden beispielsweise Messgeräte unter dem Namen Micropilot produziert und vertrieben, welche nach dem LaufzeitMessverfahren arbeiten und dazu dienen, einen Füllstand eines Mediums in einem Behälter zu bestimmen und/oder zu überwachen. Bei der freistrahlenden Laufzeitmessmethode werden beispielsweise Mikrowellen bzw. Radarwellen über eine Antenne oder beim Einsatz von Ultraschallwellen über einen Ultraschallwandler in einen Freiraum bzw. Prozessraum ausgesendet, und die an der Mediumsoberfläche reflektierten Echowellen werden nach der abstandsabhängigen Laufzeit des Signals wieder von der Antenne bzw. Messumformer empfangen. Aus der Zeitdifferenz zwischen dem Aussenden der Hochfrequenzimpulse und dem Empfang der reflektierten Echosignale lässt sich der Abstand des Messgerätes zu der Mediumsoberfläche ermitteln. Unter Berücksichtigung der Geometrie des Behälterinnern wird dann der Füllstand des Mediums als relative oder absolute Größe ermittelt. Das so genannte FMCW-Verfahren (Frequency Modulated Continuous Waves) ist in diesem Zusammenhang mit dem obigen Messprinzip der Füllstandsmessung und dem obigen Verfahren ebenfalls ausführbar.

Ein generelles Problem bei allen freistrahlenden Messmethoden zur Ermittlung des Füllstandes nach dem Laufzeitmessverfahren ist die Ausbildung von Mehrwegeausbreitungen und Störreflexionen von Messsignalen an Einbauten im Behälter, z.B. an Rührwerken, Verstrebungen und Rohren und der Behälterwand. Durch die Mehrwegeausbreitung von Sende- und Reflexionssignale werden die Reflexionssignale bzw. Echos leicht zeitversetzt von der Antenne bzw. dem Empfangselement empfangen. Die Überlagerung von den verschieden Reflexionssignalen aufgrund von Mehrwegsausbreitungen führen zu einer Verzerrung der aus den Reflexionssignalen gebildeten Hüllkurve bzw. Echokurve und somit zu einer Verschlechterung der Messgenauigkeit. Des Weiteren können Reflexionssignale des Füllstandes mit einer geringen Amplitude durch Störechosignale mit einer größeren Amplitude vollständig überdeckt werden, wodurch eine Ermittlung des Füllstandes erschwert wird.

Die elektronische Ausblendung von Mehrwege-Reflexionssignalen und Störreflexionssignalen aufgrund von Einbauten oder der Tankwand mittels zirkular polarisierter Mikrowellen ist aus der Patentanmeldung EP 1 431 723 A1 bekannt geworden. Die Druckschrift behandelt unter anderem, wie mittels verschiedenen zirkular polarisierten Wellen das Füllstandsmesssignal von den Störersignalen in der Echohüllkurve unterscheidbar und erkennbar gemacht werden kann. Des Weiteren ist es möglich, durch die Zerlegung des zirkular polarisierten Signals (RHCP, LHCP) in zwei verschieden orthogonale linear polarisierte Signale (YLP, XLP) und deren gesonderte Auswertung den Signal-Stör-Abstand (signal-to-disturbance ratio) zu verbessern, d.h. es lässt sich dadurch das direkte Echosignal (surface signals) von den reflektierten Störsignalen (interfering echos) unterscheiden. Diese Zerlegung in Störsignale und Echosignale des gesamten Reflexionssignals wird in dieser Druckschrift durch eine mit einem hohen Rechenaufwand verbundene signaltechnische Auswertung möglich.

Ein anderes Dokument US5614831 offenbart ein Füllstandmessgerät und ein Verfahren zur Ermittlung und Überwachung des Füllstands eines Mediums in einem Behälter nach der Laufzeitmessmethode, wobei über ein erstes Einkoppelelement einer Antenne hochfrequente Sendesignale in einer vorgegebenen Polarisationsebene des elektrischen Feldes ausgesendet werden, und wobei anhand der in das erste Einkoppelelement zurück eingekoppelten Reflexionssignale der Füllstand ermittelt wird. Die Polarisationsebene des elektrischen Feldes der Sendesignale ist im Wesentlichen senkrecht oder parallel zu einer Innenwand des Behälters.

Aufgabe der Erfindung ist es, ein Verfahren zur Reduktion von Störreflexionssignalen in Reflexionssignalen von Freistrahlenden Messgeräten zur Ermittlung eines Füllstandes nach der Laufzeitmessmethode aufzuzeigen.

Diese Aufgabe wird erfindungsgemäß durch ein Verfahren zur Ermittlung und Überwachung des Füllstands eines Mediums in einem Behälter nach der Laufzeitmessmethode, wobei über ein erstes Einkoppelelement einer Antenne hochfrequente Sendesignale in einer vorgegebenen Polarisationsebene des elektrischen Feldes ausgesendet werden, wobei die Polarisationsebene des elektrischen Feldes der Sendesignale im Wesentlichen um einen Winkel von annähernd 45° zu einer Ebene, die den Ausbreitungsvektor des Sendesignals und die Oberflächennormale einer Innenwand des Behälters oder die Oberflächennormale eines Störelements im Behälter enthält, ausgerichtet wird, so dass zur Polarisationsebene parallele Komponenten von Reflexionssignalen in das erste Einkoppelelement zurück eingekoppelt werden und die Einkopplung der zur Polarisationsebene orthogonalen Komponenten von Reflexionssignalen in das erste Einkoppelelement gesperrt wird, und wobei anhand der in das erste Einkoppelelement zurück eingekoppelten Reflexionssignalen der Füllstand ermittelt wird.

Die Vorteile dieser Erfindung sind, dass die Messgenauigkeit und die Verfügbarkeit von Freistrahlenden Messgeräten zur Ermittlung eines Füllstandes nach der Laufzeitmessmethode verbessert werden.

Unter der Verfügbarkeit eines Messgerätes ist die Wahrscheinlichkeit zu verstehen, in der das Messgerät bestimmte Anforderungen zu bzw. innerhalb einer vereinbarten Zeit erfüllt.

In einer besonders bevorzugten Ausführungsform der Erfindung ist vorgesehen, dass zumindest über ein zum ersten Einkoppelelement orthogonales zweites Einkoppelelement der Antenne die orthogonalen Komponenten von Reflexionssignalen empfangen werden.

Gemäß einer vorteilhafte Ausführungsform der erfindungsgemäßen Lösung wird vorgeschlagen, dass anhand einer Differenzbildung oder Vergleichsanalyse der parallelen Komponenten von Reflexionssignalen mit den orthogonalen Komponenten von Reflexionssignalen die Ausrichtung der Polarisationsrichtung überprüft und angepasst wird.

Eine zweckmäßige Ausgestaltung der erfindungsgemäßen Vorrichtung besteht darin, dass die Signalleistung der in das zweite Einkoppelelement eingekoppelten orthogonalen Komponenten von Reflexionssignalen ermittelt wird.

Eine vorteilhafte Ausgestaltung der erfindungsgemäßen Lösung schlägt vor, dass die Position eines Reflexionssignals eines Störelements und/oder Position eines Reflexionssignals eines Mehrfachechos ermittelt wird. Der Vorteil dieser Ausgestaltung liegt darin, dass aufgrund der Bestimmung der Position von Reflexionssignalen eines Störelements und/oder Position eines Reflexionssignals eines Mehrfachechos im Behälter eine Bewertung der Reflexionssignale am ersten Einkoppelelement vorgenommen werden kann. Des Weiteren, kann aufgrund der Kenntnis der Positionen von Störelementen und der Innenwand eine entsprechende optimale Ausrichtung der Antenne am Behälter vorgenommen werden. Wodurch möglichst wenige Energieanteile der Sendesignale auf Störelemente oder die Innenwand abgestrahlt werden und somit der Großteil der Energie auf dem Direktwege auf die Oberfläche des Mediums abgestrahlt wird und von dieser in die Antenne reflektiert wird.

Gemäß einer günstigen Ausgestaltung der erfindungsgemäßen Vorrichtung wird angeregt, dass durch ein Verdrehen der Antenne in einem Prozessanschluss die Polarisationsebene der hochfrequenten Sendesignale ausgerichtet wird.

Eine vorteilhafte Ausgestaltung der erfindungsgemäßen Lösung ist es, dass das Verdrehen der Antenne in dem Prozessanschluss durch eine automatische Drehvorrichtung ausgeführt wird.

Eine besonders vorteilhafte Weiterbildung der erfindungsgemäßen Lösung schlägt vor, dass die Polarisationsebene zumindest durch ein Markierungselement zwecks Ausrichtung der Antenne angegeben wird.

Gemäß einer vorteilhaften Ausführungsform des erfindungsgemäßen Verfahrens ist vorgesehen, dass die Polarisationsebene der hochfrequenten Sendesignale durch eine elektronische Ansteuerung zumindest zweier Einkopplungselemente über die Sende-/Empfangseinheit ausgerichtet wird.

Der Vorteil der Erfindung, besonders gegenüber der europäische Patentschrift (EP 1431723 A1) liegt darin, dass die Antenne lineare oder quasi-lineare polarisierte Welle abstrahlt und die Polarisationsebene der Welle zur Behälterwand um einen bestimmten Ebenenwinkel von ca. ϑ=45° ausgerichtet wird. Durch diese spezielle Ausrichtung der Polarisationsebene des Sendesignals wird die Polarisationsebene der Reflexionssignale, dessen Ausbreitungswege über Mehrwegeausbreitung bzw. durch Mehrfachreflexionen an der Behälterwand oder Störelementen zur Antenne gelangt, um 90° gedreht. Aufgrund der dadurch auftretenden Orthogonalität der Polarisationsebene der Reflexionssignale zur Richtung des ersten Einkoppelelements werden die Reflexionssignale, die nicht direkt von der Füllstandsoberfläche reflektier werden, sondern durch Mehrfachreflexionen an der Behälterwand oder Störelementen reflektiert und in der Polarisation gedreht werden, nicht mehr von der Antenne bzw. deren erstem Einkoppelelement empfangen. Die Verzerrung bzw. Verbreiterung des Füllstandsechosignals bzw. der Reflexionssignale des Füllstandes in einer Hüllkurve, die aus der Einhüllenden von Reflexionssignalen errechnet wird, werden durch diese Methode unterbunden. Wodurch sich ein schmaleres und exakteres, schmaleres Reflexionssignal des Füllstandes erzeugen lässt. Eine signaltechnische Auswertung von Reflexionssignalen unter Berücksichtigung von verschiedenen Polarisationen ist nicht zwingend notwendig, da die Einkopplung der durch Mehrwegeausbreitung erzeugten Reflexionssignale durch den Aufbau der Antenne mit der ersten Einkoppeleinheit und die Ausrichtung der linearen Polarisationsebene zumindest teilweise verhindert wird.

Die Erfindung und ausgewählte Ausführungsbeispiele werden anhand der nachfolgenden Zeichnungen näher erläutert. Zur Vereinfachung sind in den Zeichnungen identische Teile mit dem gleichen Bezugszeichen versehen.

Es zeigt:

Fig. 1 : eine schematische Gesamtdarstellung einer auf einem Behälter montierten ersten Ausführungsform des Messgerätes mit einer Stabantenne,

Fig. 2a : eine Schnittansicht der Gesamtdarstellung gemäß der Kennzeichnung A-A in Fig. 1,

Fig. 2b : eine weitere Schnittansicht der Gesamtdarstellung gemäß der Kennzeichnung A-A in Fig. 1,

Fig. 3 : eine schematische Darstellung einer Reflexion an der Tankwand oder an einem Störelement,

Fig. 4 : eine schematische Darstellung einer zweiten Ausführungsform eines Messgeräts mit einer Hornantenne und

Fig. 5 : eine Schnittansicht der schematischen Darstellung der zweiten Ausführungsform gemäß der Kennzeichnung B-B in Fig. 4.

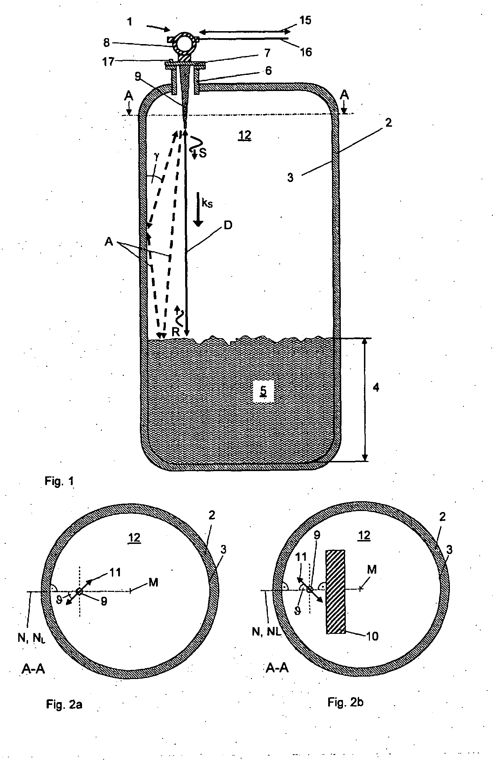

In Fig. 1 wird ein Messgerät 1 zur Ermittlung des Füllstandes 4 eines Mediums 5 in einem Behälter 2 nach einer amplitudenmodulierten oder frequenzmodulierten Laufzeitmessmethode gezeigt. Das Messgerät 1 ist über einen Flansch 7 an einem Stutzen bzw. Prozessanschluss 6 am Behälter 2 befestigt, so dass sich die Antenne 9, z.B. eine Stabantenne, im Prozessraum 12 befindet und dass sich der Messumformer 8 mit der Sende-/Empfangseinheit 18, mit der Auswerteelektronik 19 und mit der Feldbuseinheit 20, die hier nicht explizit gezeigt sind, außerhalb des Prozessraums 12 befindet. Im Messumformer 8 wird mittels einer Sende-/Empfangseinheit 18 ein pulsförmiges Sendesignal S erzeugt, das über ein erstes Einkoppelelement 13 linear polarisiert in die Antenne 9 eingekoppelt wird. Die Antenne 9 strahlt das linear polarisierte Sendesignal S in Richtung des Ausbreitungsvektors kₛ der Sendesignale S in den Prozessraum 12 ab. Dabei wird versucht, nur die Grundmode des Sendesignals S anzuregen, z.B. den HE₁₁-Mode bei einer Hornantenne und den TE₁₁-Mode bei einer Stabantenne. Beide zeigen eine auf das Medium 5 gerichtete Abstrahlcharakteristik. Die Abstrahlcharakteristik der Antenne 9 ist meist so ausgestaltet, dass ein möglichst kleiner Abstrahlwinkel des Sendesignals S in Richtung des Ausbreitungsvektors k_{S} ausgebildet wird. Durch die Beschränkung der Anregung auf die Grundmoden des Sendesignals wird vermieden, dass Energieanteile des Sendesignals S in seitliche Nebenkeulen bzw. höhere Moden von der Antenne 9 abgestrahlt werden.

Aus prozessanlagentechnischen Gründen ist es oft nur möglich, die Messgräte 1 am Rand des Behälters 2 nahe der Innenwand 3 des Behälters 2 einzubauen. Des Weiteren sind prozesstechnische Vorrichtungen bzw. Einbauten 10, wie z.B. Rührflügel, Kühlrohre, weitere Messgeräte 1, Einlauf- und Auslaufrohre, im Behälter 2 eingebaut. Diese Einbauten 10 und die Innenwand 3 des Behälters 3 können dazu führen, dass das Sendesignal S nicht über den Direktwege D von der Antenne 9 zum Medium 5 gelangt und direkt als Direktwege-Reflexionssignal R_{D} zurück reflektiert wird, sondern dass aufgrund der Einbauten bzw. Störelemente 10 eine Mehrwegeausbreitung A des ausgesendeten Mehrwege-Sendesignals S_{A} und/oder des Mehrwege-Reflexionssignals R_{A} ausgebildet wird. Eine Überlagerung der beiden Reflexionssignale R_{A}, R_{D} in der Antenne 9 mit unterschiedlichen Laufwegen und Laufzeiten bewirken eine Zeitverschiebung des gemessenen Direktwege-Reflexionssignale R_{D} bzw. des Füllstandechosignals. Beispielsweise werden die Mehrwege-Reflexionssignale R_{A} und die Mehrwege-Sendesignale S_{A} unter einem geringen Einfallswinkel γ an der Innenwand 3 des Behälters 2 total reflektiert. Diese Mehrwege-Reflexionssignale R_{A} überlagern sich in der Antenne 9 mit dem Direktwege-Reflexionssignal R_{D}, was dazu führt, dass die Reflexionssignale R von regulär an der Oberfläche des Mediums 5 reflektierten Direkt-Reflexionssignalen R_{D} überdeckt bzw. verbreitert werden, was demzufolge zu einer Verringerung der Messgenauigkeit des Messgerätes 1 bei der Ermittlung des Füllstandes 4 führt.

Das Messgerät 1 wird über eine Energieversorgungsleitung 16 mit der benötigten Energie versorgt und kommuniziert über einen Feldbus 15 mit einer entfernten Schaltzentrale oder weiteren Messgeräten 1. Die Datenübertragung bzw. Kommunikation über den Feldbus 15 erfolgt beispielsweise nach dem CAN-, HART-, PROFIBUS DP-, PROFIBUS FMS-, PROFIBUS PA-, oder FOUNDATION FIELDBUS- Standard. Ist das Messgerät 1 als Zweileitermessgerät ausgeführt, werden die Energieversorgung, von beispielsweise 48mW, und die Kommunikation ausschließlich und gleichzeitig über eine gemeinsame Zweidrahtleitung durchgeführt, wodurch eine separate Energieversorgungsleitung 16 entfällt.

Die Fig. 2a und Fig. 2b sind beispielhafte Schnittansichten der Darstellung des Messgerätes 1 auf einem Behälter 2 aus Fig. 1 gemäß der Kennzeichnung A-A gezeigt. Durch einen symbolischen Doppelpfeil ist die lineare Polarisationsebene 11 des Sendesignals S in der Antenne 9 dargestellt. In Fig. 2a ist ein Zustand dargestellt, bei dem die Polarisationsebene 11 der Antenne 9 zur Oberflächennormalenebene N_{L} der Innenwand 3 des Behälters 2 um einen um einen Ebenenwinkel ϑ von ungefähr 45° ausgerichtet ist. In Fig. 2b ist ein Zustand dargestellt, bei dem die Polarisationsebene 11 der Antenne 9 zur Oberflächennormalenebene N_{L} der Innenwand 3 des Behälters 2 und zur Oberflächennormalenebene N_{L} eines Störelements bzw. Einbauten 10 ausgerichtet ist. Bei unterschiedlichen Richtungen der Oberflächennormalen N bzw. Oberflächennormalenebenen N_{L} der Störelemente 10 bzw. der Innenwand 3 wird die Polarisationsebene 11 beispielsweise zum dem Störelement 10 bzw. der Innenwand 3 des Behälters 2 ausgerichtet, das am nächsten zur Antenne 9 positioniert ist und/oder die größten Störsignale erzeugt.

Nach dem Stand der Technik wird die lineare bzw. quasi lineare Polarisationsebene 11 des Sendesignale S um einen Ebenenwinkel ϑ von 0° oder 90° Grad zu einer Oberflächennormalen N bzw. Oberflächennormalenebenen N_{L} der Innenwand 3 des Behälters 2 oder eines Störelementes ausgerichtet, was dazu führt dass das Direktwege-Reflexionssignal R_{D} des Füllstandes 4 und das Mehrwege-Reflexionssignal R_{A} der Mehrwegeausbreitung A von der Antenne 9 überlagert empfangen werden. Die Oberflächennormalenebenen N_{L}, die lineare bzw. quasi lineare Polarisationsebene 11, sowie die Innenwand 3 des Behälters 2 sind in der Fig. 2a und Fig. 2b nur zweidimensional dargestellt, und ihre dritten Dimension erstreckt sich senkrecht zu der Zeichenebene. Wie in Fig. 2a und Fig. 2b gezeigt, durchschneiden die Oberflächennormalenebenen N_{L} bzw. Oberflächennormalen N bei beispielsweise einem runden Querschnitt des Behälters 2 den Mittelpunkt bzw. die Mittelgerade M des Behälters 2.

Erfindungsgemäß ist die Polarisationsebene 11 der Antenne 9 zu einer Oberflächennormalen N bzw. Oberflächennormalenebenen N_{L} der Innenwand 3 oder Einbauten 10 um einen Ebenenwinkel ϑ von ungefähr 45° angeordnet. Durch diese Ausgestaltung lässt sich die Überlagerung des Direktwege-Reflexionssignals R_{D} vom Medium 5 über die Direktwegeausbreitung D durch die Mehrwege-Reflexionssignale R_{A} der Mehrwegeausbreitung A vermeiden, indem die Mehrwege-Reflexionssignale R _{A} nicht mehr in die Antenne 9 bzw. das erste Einkoppelelement 13 zurück eingekoppelt werden können.

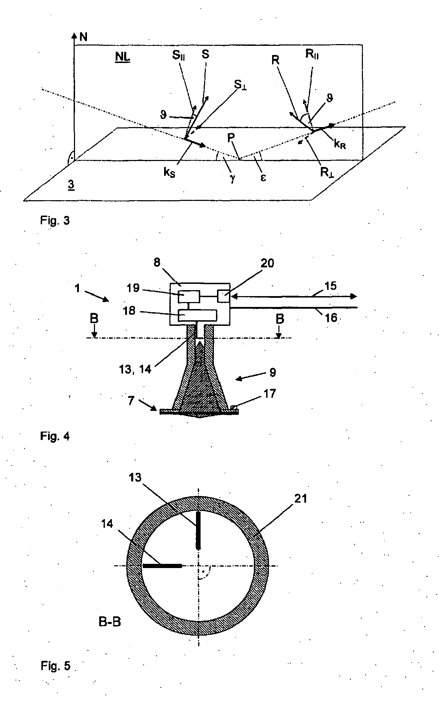

Fig. 3 zeigt den Fall der Mehrfachreflexion an einem Ausschnitt der Innenwand 3 des Behälters 2. Die gezeigte Reflexion eines Sendesignals S an einer Mediumsgrenzoberfläche kann leicht, vorausgesetzt unter einem flachen Einfallswinkel γ mit einem Ausbreitungsvektor kₛ des Sendesignals S eingestrahlt, aus den Fresnel-Gleichungen hergeleitet werden, was in diesem Rahmen nicht explizit durchgeführt wird. Das Sendesignal S, das unter einem flachen Einfallswinkel γ mit einem Ausbreitungsvektor kₛ des Sendesignals S auf die Grenzfläche bzw. Innenwand 3 eingestrahlt wird, wird als Reflexionssignal R unter einem Ausfallswinkel ε mit einem Ausbreitungsvektor k_{R} des Reflexionssignals R reflektiert. Nach dem Gesetz der Reflexion ist der Einfallswinkel γ gleich dem Ausfallswinkel ε. Es ist weiterhin zu beachten, dass in den folgenden Ausführungen nur der elektrische Feldvektor des Sendesignals S und Reflexionssignals R betrachtet wird. Die Polarisationsrichtung 11 des Sendesignals S bzw. der elektrische Feldvektor der elektromagnetischen Welle des Sendesignals S lässt sich durch parallele Komponenten S_{II} der Sendesignale S zur Oberflächennormalenebene N _{L} und durch orthogonale Komponenten S_{⊥} der Sendesignale S zur Oberflächennormalenebene N_{L} ausdrücken. Ist die Polarisationsebene 11 genau um einen Ebenenwinkel ϑ von 45° zur Oberflächennormalenebene N_{L} ausgerichtet, so sind parallele Komponenten S_{II} der Sendesignale S und orthogonale Komponenten S_{⊥} der Sendesignale S im Betrag gleich. Die Ausrichtung der Polarisationsrichtung 11 des Sendesignals S lässt sich durch die Vektoraddition aus den parallelen Komponenten S_{II} der Sendesignale S und aus den orthogonalen Komponenten S_{⊥} der Sendesignale S zur Oberflächennormalenebene N_{L} der Innenwand 3 oder der Einbauten 10 bestimmen.

Die Reflexion von Sendesignalen S an einer Grenzfläche bzw. Innenwand 3 unter einem kleinen Einfallswinkel γ lässt sich, wie aus Fig. 3 ersichtlich, folgendermaßen beschreiben. Die parallelen Komponenten S_{II} der Sendesignale S, deren elektrische Feldvektoren in der Oberflächennormalenebene N_{L} liegt bzw. parallel dazu sind, werden an der Innenwand 3 bzw. Grenzfläche wieder in gleicher Ausrichtung parallel zur Oberflächennormalenebene N_{L} als parallele Komponenten R_{II} der Reflexionssignale R reflektiert. Die orthogonalen Komponenten S_{⊥} der Sendesignale S, deren elektrische Feldvektoren senkrecht zur Oberflächennormalenebene N_{L} ausgerichtet sind, werden an der Innenwand 3 bzw. Grenzfläche als um einen Ebenenwinkel ϑ von 180° gedrehte bzw. als 180 °-phasenverschobene orthogonale Komponenten R_{⊥} der Reflexionssignale R reflektiert. Durch den Phasensprung von 180° der orthogonalen Komponenten R_{⊥} der Reflexionssignale R wird die lineare Polarisationsebene 11 der Sendesignale S am Reflexionspunkt P in eine um 90° gedrehte Polarisationsebene 11 der Reflexionssignale R überführt. Diese um 90° gedrehte Polarisationsrichtung 11 der Reflexionssignale R lässt sich nicht mehr in die Antenne 9 bzw. in das erste Einkoppelelement 13 einkoppeln, da dessen lineare Polarisationsebene 11 orthogonal dazu ausgerichtet ist und das um 90° gedrehte Reflexionssignal R beispielsweise keine Anteile in Richtung des ersten Einkoppelelementes 13 aufweist.

Bei den auf dem Direktwege D von dem Medium 5 reflektierten Reflexionssignalen R wird die lineare Polarisationsebene 11 im Vergleich zu den ausgesendeten Sendesignalen S um 180° gedreht. Durch die Reflexion an der Oberfläche des Mediums 5 entsteht lediglich eine Phasenverschiebung von 180° zwischen den Sendesignalen S und den Reflexionssignalen R, wodurch die um 180° gedrehten Reflexionssignale R zurück in die Antenne 9 und in das erste Einkoppelelement 13 eingekoppelt werden.

In Fig. 4 ist ein weiteres Beispiel eines erfindungsgemäßen Messgeräts 1 mit einer als Horn ausgebildeten Antenne 9 dargestellt, wobei das Horn mit einem dielelektrischen Material gefüllt ist. Über ein erstes Einkoppelelement 13 und/oder gegebenenfalls eine zweites Einkoppelelement 14 wird ein linear bzw. quasi linear polarisiertes Sendesignal S, das in der Sende-/Empfangseinheit 18 des Messumformers 8 erzeugt wird, in den dielektrischen Füllkörper der Hornantenne eingekoppelt. Das Sendesignal S wird in einer bestimmten Grundmode, z.B. in dem H₁₁-Mode, in den Prozessraum 12 auf das Medium 5 gerichtet abgestrahlt und auf dem Direktwege D oder über Mehrwegeausbreitungen A bzw. Mehrfachreflexionen wieder von der Antenne 9 und den Einkoppelelementen 13, 14 empfangen.

In der im Messumformer 8 befindlichen Sende-/Empfangseinheit 18 und Auswerteeinheit werden die Reflexionssignale R signaltechnisch verarbeitet und ausgewertet. Aus den Reflexionssignalen R wird beispielsweise durch eine sequentielle Abtastung ein Zeitgedehntes Zwischenfrequenzsignal ermittelt, woraus eine Hüllkurve der empfangenen maximalen Amplituden der Reflexionssignale R in Abhängigkeit der Laufzeit berechnet wird. Über eine Feldbuseinheit 20 und den Feldbus 15 kommuniziert das Messgerät 1 mit entfernten Messgeräten 1 oder mit einer Schaltzentrale. Am Flansch 7 ist beispielsweise ein entsprechendes Markierungselement 17 angebracht, das die Polarisationsebene 11 der Sendesignale S der Antenne 9 bzw. des Messgerätes 1 anzeigt. Bei dem Markierungselement 17 handelt es sich beispielsweise um einen Aufkleber, ein Kerbe, ein Schweißpunkt, einen angebrachten Kleinkörper oder Lack in Form eines Pfeils, eines Punktes oder eines Striches.

Die Fig. 5 ist eine Schnittansicht der Darstellung des Messgerätes 1 aus Fig. 4 gemäß der Kennzeichnung B-B gezeigt. In dem Hohlleiter 21 der Antenne 9 sind ein erstes Einkoppelelement 13 und ein dazu orthogonal angeordnetes zweites Einkoppelelement 14 ausgestaltet. Das erste Einkoppelelement 13 erzeugt das linear polarisierte Sendesignal S und empfängt das auf den Direktwege D von der Oberfläche des Mediums 5 reflektierte Reflexionssignal R. Das zweite Einkoppelelement 14 wird dazu verwendet, die durch Mehrwegeausbreitung A reflektierten Reflexionssignale R zu empfangen. Die durch Mehrwegeausbreitung A reflektierten Reflexionssignale R enthalten Informationen über die Position, die Dimension und die Oberflächenbeschaffenheit von Störelemente bzw. Einbauten 10 und der Innenwand 3 des Behälters 2. Aus dieser Information können die am ersten Einkoppelelement 13 ankommenden Reflexionssignale R weiter verifiziert werden, indem die Signalanteile der Reflexionssignale, die von den Störelemente bzw. Einbauten 10 und der Innenwand 3 des Behälters 2 reflektiert werden, heraus gerechnet werden können. Beispielsweise kann durch eine entsprechende Differenzbildung der Reflexionssignale R am ersten Einkoppelelement 13 und am zweiten Einkoppelelemente 14 die Signalanteile der Störelemente bzw. Einbauten 10 und der Innenwand 3 aus den empfangenen Reflexionssignalen R des ersten Einkoppelelementes 13 beseitigt werden.

Da sich die Position der Störelemente bzw. Einbauten 10 im Behälter 2 nicht ändert, kann beispielsweise aus den mit dem zweiten Einkoppelelement 14 empfangenen Reflexionssignalen R die Ausbreitungsgeschwindigkeit der elektromagnetischen Welle in der Gasphase bestimmt werden. Diese Geschwindigkeitsbestimmung ist für eine exakte Laufzeitmessung wichtig, da sich die Ausbreitungsgeschwindigkeit der elektromagnetischen Welle aufgrund der Umgebungsbedingungen, wie z.B. Temperatur, Gasmischverhältnis, verändert.

Durch die getrennte Ermittlung der Direktwege-Reflexionssignale R_{D}, z.B. des Füllstandes 4, und der Mehrwege-Reflexionssignale R_{A}, z.B. von Einbauten, können diese beiden Reflexionssignale R_{D}, R_{A} getrennt von einander ausgewertet werden. Dadurch können entsprechende Erkenntnisse aus den einen Mehrwege-Reflexionssignalen R_{A}, wie z. B. die Position von Einbauten 10, in den Direktwege-Reflexionssignalen R_{D} berücksichtig werden. Falls Signalanteile der Störelement 10 doch noch von dem ersten Einkoppelelement 13 empfangen werden, ist es durch die am zweiten Einkoppelelement 14 empfangenen Mehrwege-Reflexionssignale R_{A} möglich, diese mittels der Auswerteeinheit signaltechnisch zu entfernen. Zusammenfassend lässt sich sagen, dass aufgrund der Ausrichtung der Polarisationsrichtung 11 der Sendesignale S des ersten Einkoppelelementes 13 um einen Ebenenwinkel ϑ von 45° zur Oberflächennormalenebene N_{L} die Direktwege-Reflexionssignale R_{D} der Oberfläche des Mediums 5 von den Mehrwege-Reflexionssignaien R_{A} der Einbauten 10 oder Innenwand 3 getrennt bzw. separiert wird.

Des Weiteren ist durch die Mehrwege-Reflexionssignale R_{A} der Mehrwegeausbreitung A eine Bewertung der Ausrichtung der linearen Polarisationsebene 11 möglich, indem die Signalleistungen P der Mehrwege-Reflexionssignale R_{A} und dir Signalleistung der Direktwege-Reflexionssignale R_{D} ermittelt werden und miteinander verglichen werden. Aus einer Differenzbildung oder Vergleichsanalyse der empfangenen Direktwege-Reflexionssignale R_{D} am ersten Einkoppelelement 13 mit den Mehrwege-Reflexionssignalen R_{A} des zweiten Einkoppelelementes 14 kann eine Aussage über die Ausrichtung der Polarisationsebene 11 der Sendesignale S der Antenne 9 zu der Oberflächennormalenebene N_{L} der Innenwand 3 des Behälters 2 oder von Einbauten 10 gemacht werden. Das Messgerät 1 wird hierzu in einen Ausrichtungsmodus geschaltet, indem abwechselnd ein Zustand der momentanen Ausrichtung der linearen Polarisationsebene 11 bestimmt und dementsprechend beispielsweise die Ausrichtung der Antenne 9 im Prozessanschluss 6 verändert wird. Die Ausrichtung der Antenne 9 kann beispielsweise durch einen automatischen Ausrichtungsmechanismus, z.B. einen Elektromotor angetriebenen Drehflansch, erfolgen.

Da die meisten Behälter eine zylindrische Form aufweisen, muss man von einer leicht gebogenen Oberfläche der Innenwand 3 ausgehen. Die Raumrichtung der genäherten Oberflächennormale N lässt sich recht leicht bestimmen, indem die Tangente, die den Mittelpunkt M des Behälters 2 und die Mitte des Stutzens 6 schneidet, bestimmt wird.

### Bezugszeichenliste

- 1.: Messgerät
- 2.: Behälter
- 3.: Innenwand, Innenfläche
- 4.: Füllstand
- 5.: Medium
- 6.: Stutzen, Prozessanschluss
- 7.: Flansch, Befestigungselement
- 8.: Messumformer
- 9.: Antenne
- 10.: Störelement, Einbauten
- 11.: Polarisationsebene
- 12.: Prozessraum
- 13.: erstes Einkoppelelement
- 14.: zweites Einkoppelelement
- 15.: Feldbus
- 16.: Energieversorgungsleitung
- 17.: Markierungselement
- 18.: Sende-/Empfangseinheit, Erzeugungseinheit
- 19.: Auswerteeinheit
- 20.: Feldbuseinheit
- 21.: Hohlleiter

- S: Sendesignale
- S_{II}: parallele Komponenten der Sendesignale
- S_{⊥}: orthogonale Komponenten der Sendesignale
- S_{A}: Mehrwege-Sendesignale
- S_{D}: Direktwege-Sendesignale
- R: Reflexionssignale
- R_{II}: parallele Komponenten der Reflexionssignale
- R_{⊥}: orthogonale Komponenten der Reflexionssignale
- R_{A}: Mehrwege-Reflexionssignale
- R_{S}: Störelement-Reflexionssignale
- R_{D}: Direktwege-Reflexionssignale
- N: Oberflächennormalen
- N_{L}: Oberflächennormalenebene, Ebene
- k_{S}: Ausbreitungsvektor der Sendesignale
- k_{R}: Ausbreitungsvektor der Reflexionssignale
- M: Mittelpunkt bzw. Mittelgerade
- D: Direktwegeausbreitung, Direktwege
- A: Mehrwegeausbreitung, Mehrwege
- γ: Einfallswinkel
- ε: Ausfallswinkel

## Patentansprüche

1. Verfahren zur Ermittlung und Überwachung des Füllstands (4) eines Mediums (5) in einem Behälter (2) nach der Laufzeitmessmethode, wobei über ein erstes Einkoppelelement (13) einer Antenne (9) hochfrequente Sendesignale (S) in einer vorgegebenen Polarisationsebene (11) des elektrischen Feldes ausgesendet werden, und wobei anhand der in das erste Einkoppelelement (13) zurück eingekoppelten Reflexionssignale (R) der Füllstand (4) ermittelt wird, **dadurch gekennzeichnet, dass** die Polarisationsebene (11) des elektrischen Feldes der Sendesignale (S) im Wesentlichen um einen Ebenenwinkel (ϑ) von annähernd 45° zu einer Ebene (N_{L}), die den Ausbreitungsvektor (kₛ) des Sendesignals (S) und die Oberflächennormale (N) einer Innenwand (3) des Behälters (2) oder die Oberflächennormale (N) eines Störelements (10) im Behälter (2) enthält, ausgerichtet wird, so dass zur Polarisationsebene (11) parallele Komponenten (R_{II}) von Reflexionssignalen (R) in das erste Einkoppelelement (13) zurück eingekoppelt werden und die Einkopplung der zur Polarisationsebene (11) orthogonalen Komponenten (R_{⊥}) von Reflexionssignalen (R) in das erste Einkoppelelement (13) gesperrt wird.

2. Verfahren nach Anspruch 1, wobei zumindest über ein zum ersten Einkoppelelement (13) orthogonales zweites Einkoppelelement (14) der Antenne (9) die orthogonalen Komponenten (R_{⊥}) von Reflexionssignalen (R) empfangen werden.

3. Verfahren nach Anspruch 2, wobei anhand einer Differenzbildung oder Vergleichsanalyse der parallelen Komponenten (R_{⊥}) von Reflexionssignalen (R) mit den orthogonalen Komponenten (R_{⊥}) von Reflexionssignalen (R) die Ausrichtung der Polarisationsrichtung (11) überprüft und angepasst wird.

4. Verfahren nach Anspruch 2 oder 3, wobei die Signalleistung (P) der in das zweite Einkoppelelement (14) eingekoppelten orthogonalen Komponenten (R⊥) von Reflexionssignalen (R) ermittelt wird.

5. Verfahren nach Anspruch 2 oder 3, wobei die Position eines Reflexionssignals eines Störelements (R_{S}) und/oder Position eines Reflexionssignals eines Mehrfachechos (R_{A)} ermittelt wird.

6. Verfahren nach Anspruch 1 oder 5, wobei durch ein Verdrehen der Antenne (9) in einem Prozessanschluss (6) die Polarisationsebene (11) der hochfrequenten Sendesignale (S) ausgerichtet wird.

7. Verfahren nach Anspruch 6, wobei das Verdrehen der Antenne (9) in dem Prozessanschluss (6) durch eine automatische Drehvorrichtung ausgeführt wird.

8. Verfahren nach Anspruch 1,3 oder wobei die Polarisationsebene (11) zumindest durch ein Markierungselement (17) zwecks Ausrichtung der Antenne (9) angegeben wird.

9. Verfahren nach Anspruch 1, 3, 6 oder 8, wobei die Polarisationsebene (11) der hochfrequenten Sendesignale (S) durch eine elektronische Ansteuerung zumindest zweier Einkopplungselemente (13,14) über die Sende-/Empfangseinheit (18) ausgerichtet wird.

## Claims

1. Method for determining and monitoring the level (4) of a medium (5) in a tank (2) using the time-of-flight principle, where high-frequency transmission signals (S) are emitted via a first coupling element (13) of an antenna (9) in a prespecified plane of polarization (11) of the electric field, and where the level (4) is determined based on the reflection signals (R) injected back into the coupling element (13), **characterized in that** the plane of polarization (11) of the electric field of the transmission signals (S) is primarily arranged around an angle (θ) of approximately 45° to a plane (N_{L}), which contains the propagation vector (kₛ) of the transmission signal (S) and the surface standard (N) of an inner wall (3) of the tank (2) or the surface standard (N) of an interference element (10) in the tank (2), in such a way that components (R_{II}) of reflection signals (R) that are parallel to the plane of polarization (11) are injected back into the first coupling element (13), and the injection of the components (R_{⊥}) of reflection signals (R) that are orthogonal to the plane of polarization (11) into the first coupling element (13) is blocked.

2. Method as per Claim 1, where the orthogonal components (R_{⊥}) of reflection signals (R) are at least received via a second coupling element (14) of the antenna (9) orthogonal to the first coupling element (13).

3. Method as per Claim 2, where the orientation of the polarization direction (11) is checked and adapted by calculating the difference or via comparative analysis of the parallel components (R_{II}) of reflection signals (R) with the orthogonal components (R_{⊥}) of reflection signals (R).

4. Method as per Claim 2 or 3, where the signal power (P) of the orthogonal components (R_{⊥}) of reflection signals (R) injected into the second coupling element (14) is determined.

5. Method as per Claim 2 or 3, where the position of a reflection signal of an interference element (R_{S}) and/or the position of a reflection signal of a multiple echo (R_{A}) is determined.

6. Method as per Claim 1 or 5, where the plane of polarization (11) of the high-frequency transmission signals (S) is aligned by turning the antenna (9) in a process connection (6).

7. Method as per Claim 6, where an automatic rotating unit turns the antenna (9) in the process connection (6).

8. Method as per Claim 1, 3 or 6, where the plane of polarization (11) is specified at least by one marking element (17) for the purpose of aligning the antenna (9).

9. Method as per Claim 1, 3, 6 or 8, where the plane of polarization (11) of the high-frequency transmission signals (S) is aligned by an electronic control unit of at least two coupling elements (13, 14) via the transmitter/receiver unit (18).

## Revendications

1. Dispositif destiné à la détermination et la surveillance du niveau (4) d'un produit (5) au sein d'un réservoir (2) d'après la méthode de la mesure du temps de propagation, des signaux d'émission (S) haute fréquence étant émis par l'intermédiaire d'un premier élément d'injection (13) d'une antenne (9) dans un plan de polarisation (11) prédéfini du champ électrique, et le niveau (4) étant déterminé au moyen des signaux de réflexion (R) réinjectés dans le premier élément d'injection (13), **caractérisé en ce que** le plan de polarisation (11) du champ électrique des signaux d'émission (S) est pour l'essentiel orienté selon un angle (θ) d'en. 45° par rapport à un plan (N_{L}), qui contient le vecteur de propagation (kₛ) du signal d'émission (S) et la normale à la surface (N) d'une paroi intérieure (3) du réservoir (2) ou la normale à la surface (N) d'un élément perturbateur (10) au sein du réservoir (2), de telle manière que sont réinjectées les composantes (R_{II}) des signaux de réflexion (R), parallèles au plan de polarisation (11), et que l'injection des composantes (R_{□}) des signaux de réflexion (R), orthogonales par rapport au plan de polarisation (11), dans le premier élément d'injection (13) est bloquée.

2. Procédé selon la revendication 1, pour lequel les composantes orthogonales (R_{□}) des signaux de réflexion (R) sont reçues au minimum par l'intermédiaire d'un deuxième élément d'injection (14) de l'antenne (9), orthogonal par rapport au premier élément d'injection (13).

3. Procédé selon la revendication 2, pour lequel l'orientation du sens de polarisation (11) est contrôlée et adaptée au moyen d'une formation de différence ou d'une analyse comparative des composantes parallèles (R_{II}) des signaux de réflexion (R) avec les composantes orthogonales (R_{□}) des signaux de réflexion (R).

4. Procédé selon la revendication 2 ou 3, pour lequel est déterminée la puissance de signal (P) des composantes orthogonales (R_{□}) des signaux de réflexion (R), injectées dans le deuxième élément d'injection (14).

5. Procédé selon la revendication 2 ou 3, pour lequel est déterminée la position d'un signal de réflexion d'un élément perturbateur (Rₛ) et/ou la position d'un signal de réflexion d'un écho multiple (R_{A}).

6. Procédé selon la revendication 1 ou 5, pour lequel est orienté le plan de polarisation (11) des signaux d'émission (S) haute fréquence par la rotation d'une antenne (9) dans un raccord process (6).

7. Procédé selon la revendication 6, pour lequel la rotation de l'antenne (9) dans le raccord process (6) est réalisée par un dispositif de rotation automatique.

8. Procédé selon la revendication 1, 3 ou 6, pour lequel le plan de polarisation (11) est indiqué au moins par un élément de marquage (17) à des fins d'orientation de l'antenne (9).

9. Procédé selon la revendication 1, 3, 6 ou 8, pour lequel le plan de polarisation (11) des signaux d'émission (S) haute fréquence est orienté par une commande électronique d'au moins deux éléments d'injection (13, 14) par l'intermédiaire de l'unité d'émission / de réception (18).
